# EUROPÄISCHE PATENTSCHRIFT

(11) **EP 3 357 756 B1**
(45) Veröffentlichungstag und Bekanntmachung des Hinweises auf die Patenterteilung: **15.06.2022**
(21) Anmeldenummer: 18151117.1
(22) Anmeldetag: 11.01.2018
(51) Int. Cl.: B60Q 1/14, B60Q 1/00

(54) **SCHEINWERFERANORDNUNG MIT MINDESTENS ZWEI SCHEINWERFERN UND VERFAHREN ZUM BETRIEB EINER SOLCHEN SCHEINWERFERANORDNUNG**
HEADLAMP ASSEMBLY COMPRISING AT LEAST TWO HEADLAMPS AND METHOD FOR OPERATING SUCH A HEADLAMP ASSEMBLY
SYSTÈME DE PHARES POURVU D'AU MOINS DEUX PHARES ET PROCÉDÉ DE FONCTIONNEMENT D'UN TEL SYSTÈME DE PHARES

(30) Priorität: 20.01.2017 DE 102017101130
(43) Veröffentlichungstag der Anmeldung: 08.08.2018
(73) Patentinhaber: Automotive Lighting Reutlingen GmbH, 72762 Reutlingen (DE)
(72) Erfinder: KNITTEL, Joachim, 72762 Reutlingen (DE); LICHT, Martin, 72762 Reutlingen (DE)
(74) Vertreter: DREISS Patentanwälte PartG mbB

(56) Entgegenhaltungen:
- EP-A1- 1 724 153
- DE-A1- 19 602 005
- DE-A1-102014 221 666
- US-A1- 2013 076 240

## Beschreibung

Die vorliegende Erfindung betrifft eine Scheinwerferanordnung eines Kraftfahrzeugs nach dem Oberbegriff des Anspruchs 1. Die Scheinwerferanordnung umfasst mindestens zwei in einem Frontbereich des Kraftfahrzeugs montierte Scheinwerfer, wobei ein erster Scheinwerfer mindestens eine Lichtquelle zum Aussenden von Licht in einen Aussendebereich vor dem Kraftfahrzeug und ein weiterer Scheinwerfer mindestens eine weitere Lichtquelle zum Aussenden von Licht in einen weiteren Aussendebereich vor demselben Kraftfahrzeug aufweist und wobei der erste Scheinwerfer eine Überwachungseinrichtung zum Überwachen eines Überwachungsbereichs vor dem Kraftfahrzeug und zur Detektion von Personen und/oder Objekten in dem Überwachungsbereich umfasst.

Schließlich betrifft die vorliegende Erfindung ein Verfahren zum Betreiben einer Scheinwerferanordnung eines Kraftfahrzeugs nach dem Oberbegriff des unabhängigen Verfahrensanspruchs.

Eine derartige Scheinwerferanordnung mit mindestens zwei im Frontbereich eines Kraftfahrzeugs angeordneten Scheinwerfern und ein derartiges Verfahren zum Betreiben einer solchen Scheinwerferanordnung ist bspw. aus der DE 10 2014 221 666 A1 bekannt. Aus der DE 10 2014 224 035 A1 ist es bekannt, für beide Scheinwerfer eine gemeinsame Detektoreinheit in Form einer Kamera vorzusehen die, zusammen mit einer Auswerteeinrichtung Personen und/oder Objekte vor dem Kraftfahrzeug detektiert. Dies ist insbesondere für Scheinwerfer interessant, die Lichtquellen aufweisen, die Licht mit einer sehr hohen Leuchtdichte aussenden. Die Werte der Leuchtdichten liegen vorzugsweise in einem Bereich oberhalb von 200 cd/mm² bis etwa 5.000 cd/mm². Die Leuchtdichte kann annähernd homogen über die Emissionsfläche oder ähnlich eines Gaußprofils verteilt sein. Solche Halbleiterlichtquellen umfassen bspw. mindestens eine LARP (Laser Activated Remote Phosphor)-Lichtquelle eines Mikro-LARP-Lichtmoduls. Weitere Überwachungseinrichtungen sind aus der US 2003/0076240 A1 und aus der DE 196 02 005 A1 bekannt.

Die photobiologische Sicherheit von Fahrzeugscheinwerfern mit LED- oder Laser-Lichtquellen muss gewährleistet werden. Gemäß der Einteilung in Risikogruppen nach IEC 62471:2006 muss auf jeden Fall das Erreichen von Risikogruppe 3 vermieden werden. Es ist sogar das Vermeiden von Risikogruppe 2 wünschenswert. Gegebenenfalls sind auch weitere relevante Richtlinien, beispielsweise von der Bundesanstalt für Arbeitsschutz und Arbeitsmedizin zu berücksichtigen. Hierbei ist auch die Unterscheidung von Tag, Nacht und Dämmerung zu berücksichtigen. Besonders relevant ist dieses Thema im Zusammenhang mit Laser-Lichtquellen und anderen Lichtquellen, bei denen der Scheinwerfer eine besonders hohe Leuchtdichte an der Lichtaustrittsfläche aufweist. Als weiteres Beispiel seien an dieser Stelle Hochstrom-Leuchtdioden und insbesondere auch der Einsatz der vorgenannten Lichtquellen in Scheinwerfern mit kleiner Apertur genannt.

Einerseits ist eine hohe Leuchtdichte der Lichtquellen moderner Scheinwerfer durchaus gewünscht, um eine möglichst weit reichende, bei Bedarf auch sehr breite, helle Ausleuchtung der Fahrbahn vor dem Kraftfahrzeug zu gewährleisten. Andererseits gehen von den hohen Leuchtdichtewerten - wie gesagt - auch Gefahren für Personen und Tiere bzw. deren Augen aus, die sich in unmittelbarer Nähe vor dem Kraftfahrzeug (ca. 0-5 m) befinden. Das ausgesandte Licht kann in die Augen von Personen oder Tieren in unmittelbarer Nähe vor dem Kraftfahrzeug gelangen und diese irritieren oder ihre Augen schädigen. Aus diesem Grund besteht die Aufgabe der vorliegenden Erfindung darin, Objekte und Personen vor dem Kraftfahrzeug möglichst sicher und zuverlässig zu detektieren und im Bedarfsfall entsprechende Maßnahmen zu treffen, um eine Gefährdung von Personen und Tieren zu vermeiden. Im Normalfall geht von solchen Scheinwerfern kaum Gefahr aus, aber im Fehlerfall, z.B. bei beschädigtem Konverter, kann ein solcher Scheinwerfer potentiell gefährlich werden.

Diese Aufgabe wird jeweils mit den Merkmalen der unabhängigen Ansprüche gelöst. Ausgehend von dem Scheinwerfer der eingangs genannten Art wird unter anderem vorgeschlagen, dass die Überwachungseinrichtung eine Detektoreinheit zur Detektion von Personen und/oder Objekten in einem weiteren Aussendebereich mindestens einer weiteren Lichtquelle eines weiteren Scheinwerfers vor demselben Kraftfahrzeug aufweist.

Anders als im Stand der Technik ist bei der vorliegenden Erfindung die Überwachungseinrichtung also nicht Teil desselben Scheinwerfers dessen Aussendebereich sie überwachen soll. Ebenso wenig ist bei der Erfindung eine gemeinsame Überwachungseinrichtung für beide Scheinwerfer eines Kraftfahrzeugs vorgesehen. Vielmehr schlägt die Erfindung vor, dass in einem Kraftfahrzeug mit mindestens zwei Scheinwerfern die Überwachungseinrichtung des einen Scheinwerfers den Aussendebereich des anderen Scheinwerfers überwacht. Ebenso kann eine weitere Überwachungseinrichtung des anderen Scheinwerfers den Aussendebereich des ersten Scheinwerfers überwachen. Somit sind die Sendeeinheit und die Detektoreinheit in separaten, voneinander räumlich getrennten Scheinwerfern angeordnet. Durch die räumliche Trennung von Aussende- und Detektorbereich ergibt sich eine räumliche Beschränkung des Überwachungsbereichs auf den Überlappungsbereich der Aussende- und Detektorbereiche. Genauer gesagt ergibt sich der erste Überwachungsbereich des Detektors des ersten Scheinwerfers aus dem Überlappungsbereich des Aussendebereichs der Lichtquelle des weiteren Scheinwerfers und des Detektorbereichs des ersten Scheinwerfers. Ebenso ergibt sich der weitere Überwachungsbereich des weiteren Detektors des weiteren Scheinwerfers aus dem Überlappungsbereich des Aussendebereichs der Lichtquelle des ersten Scheinwerfers und des weiteren Detektorbereichs des weiteren Scheinwerfers.

Das Detektionsverfahren ist in den bzw. die Scheinwerfer eines Kraftfahrzeugs integrierbar und nutzt teilweise vorhandene Komponenten des bzw. der Scheinwerfer. Insbesondere kann als Lichtquelle des ersten und des weiteren Scheinwerfers eine sowieso vorhandene Lichtquelle des Scheinwerfermoduls verwendet werden. Die Lichtquelle des ersten Scheinwerfers umfasst bspw. eine Halbleiterlichtquelle zum Aussenden von Licht zur Erzeugung einer Scheinwerferfunktion des Scheinwerfers oder eines Teils davon. Besonders bevorzugt umfasst die Halbleiterlichtquelle des Scheinwerfers eine Laser-Lichtquelle. Ebenso kann die weitere Lichtquelle des weiteren Scheinwerfers eine Halbleiterlichtquelle, vorzugsweise eine Laser-Lichtquelle, zum Aussenden von Licht zur Erzeugung einer Scheinwerferfunktion des weiteren Scheinwerfers oder eines Teils davon umfassen.

Da die Detektion auf einen räumlichen Bereich vor dem Fahrzeug eingeschränkt ist, ist das System unempfindlich für weiter entfernt zum Kraftfahrzeug befindliche Objekte und/oder Personen.

Gemäß einer vorteilhaften Weiterbildung der Erfindung wird vorgeschlagen, dass ein Betrieb der Detektoreinheit zumindest temporär nach einem vorgegebenen Muster moduliert erfolgt, wobei das Muster für den Betrieb der Detektoreinheit einem Muster zum zumindest temporären modulierten Betrieb der weiteren Lichtquelle des weiteren Scheinwerfers desselben Kraftfahrzeugs entspricht. Somit kann die Sendeeinheit (die Lichtquelle oder das Lichtmodul) bzw. das ausgesandte Licht nach einem bestimmten Muster (z.B. mit einem periodischen Signal einer bestimmten Frequenz) moduliert werden. Die Detektoreinheit wird entsprechend moduliert betrieben, um auf Seiten der Detektoreinheit eine Störung durch Fremdlicht zu minimieren. Selbstverständlich kann dies auch in umgekehrter Richtung gelten, dass nämlich die Lichtquelle des ersten Scheinwerfers eines Kraftfahrzeugs zumindest temporär nach einem bestimmten Muster moduliert betrieben wird und ein Betrieb der weiteren Detektoreinheit des weiteren Scheinwerfers desselben Kraftfahrzeugs dementsprechend eingestellt und entsprechend moduliert betrieben wird. Das Modulationsmuster für die erste Lichtquelle des ersten Scheinwerfers (und damit auch der weiteren Detektoreinheit des weiteren Scheinwerfers) einerseits und für die weitere Lichtquelle des weiteren Scheinwerfers (und damit auch der ersten Detektoreinheit des ersten Scheinwerfers) kann das gleiche oder unterschiedlich sein. Das Modulationsmuster für die Lichtquellen der beiden Scheinwerfer kann zeitlich versetzt zueinander sein, so dass die Detektoren das empfangene, an den Objekten oder Personen im Überwachungsbereich reflektierte oder gestreute Licht den jeweiligen Lichtquellen zuordnen können.

Gemäß einer bevorzugten Ausführungsform der Erfindung wird vorgeschlagen, dass die Detektoreinheit ausgebildet ist, ein Maß von Licht zu erfassen, das an Objekten und/oder Personen, die sich in dem Überwachungsbereich befinden, reflektiert bzw. gestreut wurde. Ferner wird vorgeschlagen, dass die Überwachungseinrichtung des ersten Scheinwerfers zur Ansteuerung der Halbleiterlichtquelle des ersten Scheinwerfers in Abhängigkeit von einem Ergebnis der Detektion von Personen und/oder Objekten in dem Überwachungsbereich des Detektors des ersten Scheinwerfers ausgebildet ist. Dementsprechend kann die weitere Überwachungseinrichtung des weiteren Scheinwerfers zur Ansteuerung der Halbleiterlichtquelle des weiteren Scheinwerfers in Abhängigkeit von einem Ergebnis der Detektion von Personen und/oder Objekten in dem Überwachungsbereich des weiteren Detektors des weiteren Scheinwerfers ausgebildet sein. Insbesondere wird vorgeschlagen, dass die Überwachungseinrichtung ausgebildet ist, die Halbleiterlichtquelle des Scheinwerfers im Sinne einer Verringerung der Leuchtdichte anzusteuern, falls die Menge des an den in dem Überwachungsbereich befindlichen Objekten und/oder Personen reflektierten bzw. gestreuten Lichts einen vorgebbaren Schwellwert überschreitet. Diese Helligkeitsregelung kann auf unterschiedliche Weisen erfolgen, von denen hier nur einige beispielhaft aufgeführt sind:
- Einstellung eines Duty Cycles einer Pulsweitenmodulation (PWM) eines Betriebsstroms für die mindestens eine Halbleiterlichtquelle,
- Einstellung eines geringeren Stromes für die mindestens eine Halbleiterlichtquelle,
- Mechanische Ausblendung von Teilen des blauen Primärlichts oder des konvertierten weißen Lichts (bspw. mittels mechanischer Shutter oder Graufilter oder eines als Blende dienenden optischen Elements) innerhalb der Halbleiterlichtquelle (oder LARP-Lichtquelle) oder innerhalb des Scheinwerfers,
- Verschieben von optischen Elementen innerhalb der Halbleiterlichtquelle (oder LARP Lichtquelle) derart, dass der Primärstrahl des blauen Lichts defokussiert wird, so dass die Leuchtdichte reduziert wird,
- Verschieben von optischen Elementen innerhalb des Scheinwerfers derart, dass der Öffnungswinkel des in Lichtaustrittsrichtung abgestrahlten Lichtbündels vergrößert wird,
- Mechanisches Drehen eines Abstrahlprofils (bspw. realisiert durch Drehung des Lichtmoduls im Scheinwerfer) derart, dass das detektierte Objekt bzw. die detektierte Person nicht mehr angestrahlt wird,
- Einschalten von elektro-optischen aktiven Schichten auf einer Reflektor-Beschichtung des Fahrzeugscheinwerfers zur Reduzierung der Lichtintensität.

Die der vorliegenden Erfindung zugrundeliegende Aufgabe wird auch durch eine Scheinwerferanordnung der eingangs genannten Art gelöst, bei der die Überwachungseinrichtung des ersten Scheinwerfers eine Detektoreinheit zur Detektion von Personen und/oder Objekten in dem weiteren Aussendebereich der mindestens einen weiteren Lichtquelle des weiteren Scheinwerfers der Scheinwerferanordnung vor demselben Kraftfahrzeug aufweist. Des Weiteren wird insbesondere vorgeschlagen, dass der weitere Scheinwerfer eine weitere Überwachungseinrichtung zum Überwachen eines weiteren Überwachungsbereichs vor dem Kraftfahrzeug und zur Detektion von Personen und/oder Objekten in dem weiteren Überwachungsbereich umfasst, wobei die weitere Überwachungseinrichtung des weiteren Scheinwerfers eine weitere Detektoreinheit zur Detektion von Personen und/oder Objekten in dem Aussendebereich der mindestens einen Lichtquelle des ersten Scheinwerfers der Scheinwerferanordnung vor demselben Kraftfahrzeug aufweist.

Der erste Scheinwerfer der Scheinwerferanordnung ist vorzugsweise nach einem der Ansprüche 2 bis 8 ausgebildet. Dementsprechend ist der weitere Scheinwerfer der Scheinwerferanordnung vorzugsweise nach Anspruch 9 ausgebildet. Grundsätzlich können die beiden Scheinwerfer der Scheinwerferanordnung identisch ausgebildet sein, wobei lediglich die Detektoreinheit des ersten Scheinwerfers den Aussendebereich der weiteren Lichtquelle des anderen Scheinwerfers auf Objekte und/oder Personen überwacht und die Detektoreinheit des weiteren Scheinwerfers den Aussendebereich der ersten Lichtquelle des ersten Scheinwerfers auf Objekte und/oder Personen überwacht.

Die der vorliegenden Erfindung zugrundeliegende Aufgabe wird auch durch ein Verfahren der eingangs genannten Art gelöst, bei dem eine Detektoreinheit der Überwachungseinrichtung derart in dem ersten Scheinwerfer angeordnet und betrieben wird, dass sie Personen und/oder Objekte in dem Aussendebereich der mindestens einen Lichtquelle des weiteren Scheinwerfers der Scheinwerferanordnung vor demselben Kraftfahrzeug detektieren kann.

Weitere Merkmale und Vorteile der vorliegenden Erfindung werden nachfolgend anhand der Figuren näher erläutert. Es zeigen:
- Figur 1: einen Frontbereich eines Kraftfahrzeugs mit einem Beispiel für eine erfindungsgemäße Scheinwerferanordnung mit zwei erfindungsgemäßen Scheinwerfern;
- Figur 2: ein Beispiel für eine Überwachungseinrichtung einer erfindungsgemäßen Scheinwerferanordnung; und
- Figur 3: einen erfindungsgemäßen Scheinwerfer gemäß einer bevorzugten Ausführungsform.

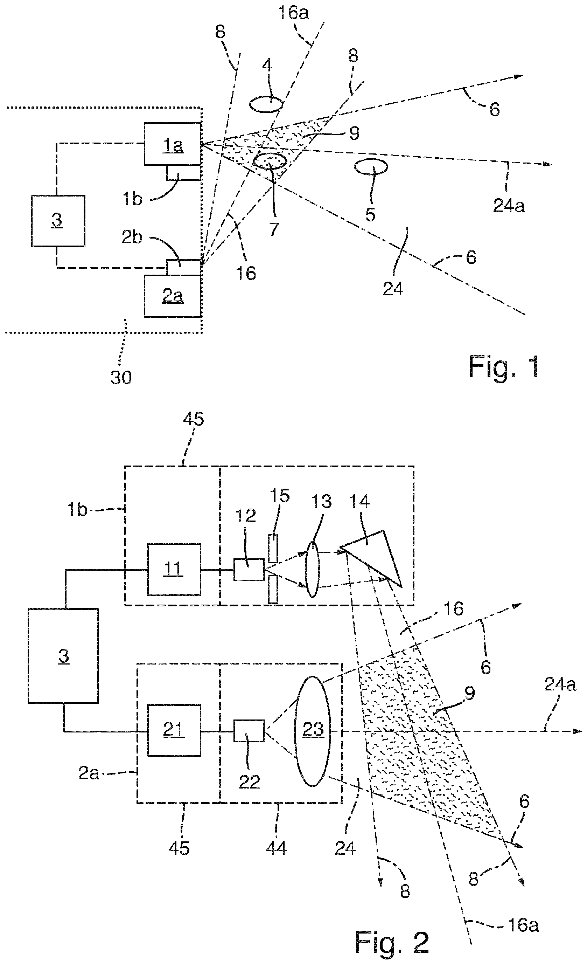

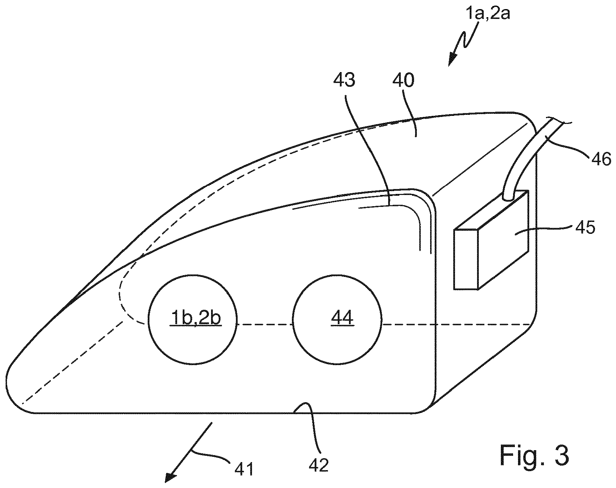

In Figur 1 ist ein Frontbereich eines Kraftfahrzeugs 30 schematisch dargestellt. An dem Frontbereich des Kraftfahrzeugs 30 ist nahe der linken und rechten Außenseite der Fahrzeugkarosserie jeweils ein Scheinwerfer 1a, 2a angeordnet. Die Scheinwerfer 1a, 2a sind vorzugsweise in entsprechenden Einbauöffnungen in der Fahrzeugkarosserie angeordnet und befestigt. Jeder Scheinwerfer 1a, 2a weist ein Gehäuse 40 auf, das bspw. aus Kunststoff gefertigt ist (vgl. Figur 3). Auf einer Lichtaustrittsrichtung 41 des Gehäuses 40 weist dieses eine Lichtaustrittsöffnung 42 auf, die durch eine transparente Abdeckscheibe 43 zum Schutz des Inneren des Gehäuses vor Feuchtigkeit und Schmutz verschlossen ist. Die Abdeckscheibe 43 besteht aus Glas oder Kunststoff. Sie kann zumindest bereichsweise mit optisch wirksamen Elementen (bspw. Prismen oder Zylinderlinsen) versehen sein. Im Inneren des Gehäuses 40 kann ein Lichtmodul 44 zur Erzeugung einer beliebigen Scheinwerferfunktion (bspw. Abblendlicht, Fernlicht, Nebellicht, oder eine beliebige AFS (Adaptive Frontlighting System)-Funktionalität) oder eines Teils davon angeordnet sein. Das Lichtmodul 44 umfasst mindestens eine Lichtquelle 22 (vgl. Figur 2) zum Aussenden von Licht in einen Aussendebereich 24 vor dem Kraftfahrzeug 30. Die Lichtquelle 22 umfasst vorzugsweise mindestens eine Halbleiterlichtquelle, die Licht mit einer sehr hohen Leuchtdichte aussendet. Die Werte der Leuchtdichte liegen vorzugsweise in einem Bereich oberhalb von 200 cd/mm² bis etwa 5.000 cd/mm². Die Leuchtdichte kann annähernd homogen über die Emissionsfläche oder ähnlich eines Gaußprofils verteilt sein. Solche Halbleiterlichtquellen umfassen bspw. mindestens eine LARP (Laser Activated Remote Phosphor)-Lichtquelle eines Mikro-LARP-Lichtmoduls 44. In diesem Fall wären die Scheinwerfer 1a, 2a also Laser-Scheinwerfer. Ferner umfasst das Lichtmodul 44 mindestens eine Optik 23, welche das von der Lichtquelle 22 ausgesandte Licht bündelt und/oder die Abmessungen und Lichtstärkeverteilung der resultierenden Scheinwerferfunktion oder des Teils davon, der durch das Lichtmodul erzeugt wird, bestimmt. Die Optik 23 kann eine Vorsatzoptik, mindestens einen Reflektor und/oder mindestens eine Linse umfassen.

Ferner umfasst der Scheinwerfer 1a, 2a ein Steuergerät 45 zur Ansteuerung der Lichtquelle 22 (vgl. Figur 3). In dem gezeigten Beispiel ist das Steuergerät 45 außen an einer Seitenwand des Gehäuses 40 befestigt. Selbstverständlich kann es auch an einer beliebigen anderen Stelle am Gehäuse 40 oder in einem Abstand dazu im Kraftfahrzeug 30 angeordnet sein. Das Steuergerät 45 ist über eine elektrische Leitung 46 mit dem elektrischen Bordnetz des Kraftfahrzeugs 30 verbunden, um das Steuergerät 45 und im Weiteren auch das Lichtmodul 44 (bzw. die Lichtquelle 22) und die dazugehörigen Aktoren im Inneren des Gehäuses 40 mit elektrischer Energie zu versorgen. Selbstverständlich kann das Steuergerät 45 über die Leitung 46 oder eine andere Leitung auch mit einem anderen, übergeordneten Steuergerät (sog. Body Controller) des Kraftfahrzeugs 30 oder mit einem Bussystem des Fahrzeugs 30 (z.B. CAN-Bus, FlexRay-Bus, LIN-Bus, etc.) zum Empfang von Sensorsignalen (bzgl. des aktuellen Zustand des Fahrzeugs 30 (z.B. Geschwindigkeit, Beschleunigungswerte, Lenkradeinschlag, Grad der Einfederung an der Vorder-/ Hinterachse) und/oder der Umgebung (z.B. Wetter, Straßenverhältnisse) des Fahrzeugs 30) und zum Austausch von Steuersignalen und Rückmeldungen über den aktuellen Zustand des Scheinwerfers 1a, 2a verbunden sein.

Der Scheinwerfer 1a, 2a umfasst des Weiteren eine Überwachungseinrichtung 1b, 2b zum Überwachen eines Überwachungsbereichs 9 vor dem Kraftfahrzeug 30 und zur Detektion von Personen und/oder Objekten 7 in dem Überwachungsbereich 9. In dem dargestellten Beispiel der Figur 3 ist die Überwachungseinrichtung 1b, 2b im Inneren des Gehäuses 40 angeordnet. Selbstverständlich kann sie auch außerhalb des Gehäuses 40, bspw. außen am Gehäuse 40 oder in einem Abstand dazu im Kraftfahrzeug 30 angeordnet sein (vgl. Figur 1).

Der vorliegenden Erfindung liegt die Aufgabe zugrunde, ein einfaches, vorzugsweise in den Scheinwerfer 1a, 2a integriertes Überwachungssystem für Scheinwerfer 1a, 2a mit Lichtquellen mit hoher Leuchtdichte vorzugschlagen, welches Personen und Objekte 7 in einem Gefährdungsraum 9 vor dem Fahrzeug 30 bzw. dem Scheinwerfer 1a, 2a detektiert. Das Überwachungssystem nutzt zumindest teilweise in dem Scheinwerfer 1a, 2a sowieso schon vorhandene Komponenten aus. Eine Sendeeinheit sendet Licht in Richtung des zu überwachenden Überwachungsbereichs 9 aus, das von dort evtl. befindlichen Personen oder Objekten 7 reflektiert wird. Das reflektierte Licht wird von einer Detektoreinheit 12 empfangen, die Teil der Überwachungseinrichtung 1b, 2b ist. Die Detektoreinheit 12 ist bspw. als eine Kamera (z.B. CCD-Kamera, CMOS-Kamera) realisiert, die den Detektionsbereich 16 überwacht. Alternativ besteht die Detektoreinheit 12 aus einem Halbleiterdetektor mit nur einer Detektionsfläche (bzw. einem Pixel).

Ein besonderer Aspekt der vorliegenden Erfindung besteht darin, dass die dem einen Scheinwerfer (z.B. dem linken Scheinwerfer 1a) zugeordnete Überwachungseinrichtung 1b den Aussendebereich 24 des anderen Scheinwerfers (z.B. des rechten Scheinwerfers 2a) überwacht (vgl. Figur 2). Als Sendeeinheit wird somit das Lichtmodul 44 des anderen Scheinwerfers 2a verwendet. Das von eventuell im Überwachungsbereich 9 befindlichen Personen und/oder Objekten 7 reflektierte oder gestreute Licht, das von der Detektoreinheit 12 der Überwachungseinrichtung 1b empfangen wird, entsteht also aus dem ganz normalen während des bestimmungsgemäßen Betriebs des anderen Scheinwerfers 2a ausgesandten Licht. Es ist nicht erforderlich, eine zusätzliche, separate Sendeeinheit vorzusehen.

Wesentliche Merkmale der vorliegenden Erfindung sind also die folgenden:
- Detektoreinheit 12 und Sendeeinheit 22 sind in getrennten Scheinwerfern 1a, 2a desselben Kraftfahrzeugs 30 angeordnet,
- Durch eine räumliche Trennung von Aussendebereich 24 und Detektionsbereich 16, ergibt sich eine räumliche Einschränkung des Überwachungsbereichs 9. Die Überwachungseinrichtung 1b, 2b detektiert nur Personen und Objekte 7, die sich in dem Überwachungsbereich 9 befinden, wo sich der Aussendebereich 24 und der Detektionsbereich 16 überlappen.

- Durch die räumliche Trennung von Sendeeinheit 22 und Detektoreinheit 12 ist das Überwachungssystem robust gegen Störungen durch Reflexion/ Streuung von Licht an der Abdeckscheibe 43 der Scheinwerfer 1a, 2a.
- Das Steuergerät 45 kann eine Modulationseinheit 21 aufweisen, welche die Sendeeinheit 22 bzw. das von dieser abgestrahlte Licht moduliert, um Störungen der Detektoreinheit 12 durch Fremdlicht zu minimieren.
- Als Sendeeinheit wird das Lichtmodul 44 (bzw. die Lichtquelle 22) des jeweils anderen Scheinwerfers 1a, 2a verwendet, so dass keine zusätzliche separate Sendeeinheit vorgesehen werden muss.
- Das Überwachungssystem kann auf einfache Weise ohne großen Aufwand realisiert werden.

In Figur 1 ist schematisch ein Aufbau des erfindungsgemäßen Überwachungssystems dargestellt. Um die Darstellung zu vereinfachen wird angenommen, dass der links eingebaute Scheinwerfer 1a bzw. ein Lichtmodul 44 im linken Scheinwerfer 1a Licht in einen Aussendebereich 24 abstrahlt, und die Detektoreinheit 12 in der dem rechten Scheinwerfer 2a zugeordneten Überwachungseinrichtung 2b zur Detektion verwendet wird. Selbstverständlich funktioniert die Erfindung in entsprechender Weise, wenn die linke und rechte Seite ausgetauscht werden, d.h. der rechts eingebaute Scheinwerfer 2a bzw. ein Lichtmodul 44 im rechten Scheinwerfer 2a Licht in einen Aussendebereich 24 abstrahlt, und die Detektoreinheit 12 in der dem linken Scheinwerfer 1a zugeordneten Überwachungseinrichtung 1b zur Detektion verwendet wird.

Der Aussendebereich 24 des Scheinwerfers 1a ist zur Veranschaulichung durch Linien 6 beschränkt. Dem rechten Scheinwerfer 2a ist eine Überwachungseinrichtung 2b zugeordnet, die Licht aus einem Detektionsbereich 16 empfangen kann, der durch Linien 8 beschränkt ist. Falls sich eine Person oder ein Objekt 7 gleichzeitig im Aussendebereich 24 und im Detektionsbereich 16 befindet, also im Überwachungsbereich 9, wird an der Person bzw. dem Objekt 7 Licht gestreut bzw. reflektiert und von der Detektoreinheit 12 der Überwachungseinrichtung 2b empfangen und registriert und ein entsprechendes Detektorsignal ausgegeben. Falls sich eine Person oder ein Objekt nur in einem der beiden Bereiche 16, 24 befindet, wie z.B. die Personen bzw. Objekte 4 und 5, wird von der Detektoreinheit 12 der Überwachungseinrichtung 2b kein Licht registriert und kein entsprechendes Signal ausgegeben, da entweder die Person bzw. das Objekt nicht beleuchtet wird (Person bzw. Objekt 4) oder das von der Person bzw. dem Objekt gestreute Licht nicht von der Detektoreinheit 12 registriert wird (Person bzw. Objekt 5).

Um den Einfluss von Fremdlicht zu reduzieren, wird die Lichtquelle 22 des linken Scheinwerfers 1a, die in diesem Beispiel als Sendeeinheit dient, mit einem vorgegebenen Muster moduliert, z.B. PWM-moduliert. Eine Steuerelektronik 3 dient zur Steuerung und/oder Regelung des gesamten Überwachungssystems. Sie ist bspw. Teil des Steuergeräts 45 der Scheinwerfer 1a, 2a oder aber Teil des übergeordneten Steuergeräts (sog. Body Controller). Ferner ist es denkbar, dass die Steuerelektronik 3 Teil eines separaten Steuergeräts ist, das über den Datenbus des Kraftfahrzeugs 30 mit den Steuergeräten 45 der Scheinwerfers 1a, 2a bzw. mit den den Scheinwerfern 1a, 2a zugeordneten Überwachungseinrichtungen 1b, 2b in Verbindung steht. Die Steuerelektronik 3 kennt das Muster, mit dem die Lichtquelle 22 moduliert wird, und filtert das Detektorsignal vom Streulicht aus dem von der Detektoreinheit 12 der Überwachungseinrichtung 2b, die dem rechten Scheinwerfer 2a zugeordnet ist, empfangenen Detektorsignal heraus. Das auf diese Weise gewonnene Signal liefert ein Maß für die in dem Überwachungsbereich 9 an Personen bzw. Objekten 7 gestreute Strahlungsleistung. Überschreitet das Signal einen vorgebbaren Schwellwert, kann angenommen werden, dass sich eine Person oder ein Objekt 7 im Gefährdungsbereich 9 im Vorfeld des Fahrzeugs 30 befindet. In diesem Fall sollten von der Steuerelektronik 3 zeitnah geeignete Gegenmaßnahmen getroffen werden, um eine längerfristige Gefährdung des Fahrers des Kraftfahrzeugs 30 durch reflektiertes Licht hoher Leuchtdichte bzw. der im Gefährdungsbereich 9 befindlichen Person 7 durch von dem Scheinwerfer 1a ausgesandtes Licht hoher Leuchtdichte zu vermeiden. So kann bspw. die Lichtquelle 22 des potentiell gefährdenden Scheinwerfers 1a gedimmt oder ganz deaktiviert werden. Eine Vielzahl anderer Maßnahmen sind aus dem Stand der Technik bekannt, die von der Steuerelektronik 3 ebenfalls getroffen werden könnten, um eine Gefährdung von Menschen im Umfeld des Scheinwerfers 1a zu vermeiden.

Da nur Personen und Objekte 7 im Überwachungsbereich 9 (und nicht im gesamten Detektionsbereich 16 oder Aussendebereiche 24) detektiert werden können, wird das Überwachungssystem nicht durch stark reflektierende Objekte (bspw. retroreflektierende Straßenschilder am Fahrbahnrand) außerhalb des Überwachungsbereichs 9 gestört. Das erlaubt es, die Detektionsschwelle zu verringern, um auch schwach reflektierende bzw. streuende Personen und Objekte im Überwachungsbereich 9 sicher und zuverlässig erkennen zu können. Dadurch kann die Zuverlässigkeit des Überwachungssystems und damit die Sicherheit für in der Umgebung eines Laser-Scheinwerfers 1a, 2a oder eines sonstigen Scheinwerfers mit einer Lichtquelle 22 mit hoher Leuchtdichte befindliche Personen, wie bspw. eine Person 7 im Gefährdungsbereich 9 oder den Fahrer des Kraftfahrzeugs, deutlich verbessert werden.

Wie in Figur 1 angedeutet, ist es von Vorteil, jedem Scheinwerfer 1a, 2a eine Detektoreinheit 12 bzw. eine entsprechende Überwachungseinrichtung 1b, 2b und eine Sendeeinheit, bspw. in Form des Lichtmoduls 44, zuzuordnen. Besonders bevorzugt ist es, wenn nicht nur die Sendeeinheit sondern auch die Detektoreinheit 12 bzw. die entsprechende Überwachungseinrichtung 1b, 2b integraler Bestandteil des Scheinwerfers 1a, 2a ist und bspw. im Inneren des Gehäuses 40 des Scheinwerfers 1a, 2a angeordnet ist (vgl. Figur 3). Die zur Realisierung eines Überwachungssystems zusammengehörenden bzw. zusammen arbeitenden Sendeeinheit 22 und Detektoreinheit 12 sind jeweils getrennten Scheinwerfern 1a; 2a zugeordnet bzw. in getrennten Scheinwerfern 1a; 2a angeordnet. Durch Kombination der beiden Überwachungssysteme (zum einen Sendeeinheit 22 des Scheinwerfers 1a und Detektoreinheit 12 der Überwachungseinheit 2b und zum anderen Sendeeinheit 22 des Scheinwerfers 2a und Detektoreinheit 12 der Überwachungseinheit 1b) kann der Überwachungsbereich 9 vergrößert werden. Durch die Anordnung von Sendeeinheit 22 und Detektoreinheit 12 eines Überwachungssystems in getrennten Scheinwerfern 1a; 2a wird verhindert, dass Licht von der Sendeeinheit an der Abdeckscheibe 43 gestreut oder reflektiert wird und auf die zugeordnete Detektoreinheit 12 fällt, z.B. durch Fresnel-Reflexionen oder Verschmutzung an der Oberfläche der Abdeckscheibe 43.

Figur 2 zeigt einen detaillierten Aufbau eines Überwachungssystems. Mindestens eine Lichtquelle 22 bspw. in Form eines Lasers oder einer LED in dem Scheinwerfer 2a wird von einem Modulator 21 moduliert. Die räumliche Verteilung des abgestrahlten Lichts wird durch die Optik 23 des Scheinwerfers 2a bestimmt. Die Verteilung kann einerseits durch gesetzliche Bestimmungen und/oder durch Wünsche des Kunden (z.B. des Automobilherstellers) vorgegeben sein. Die Lichtquelle 22 und die Optik 23 sind Teil des Lichtmoduls 44 des Scheinwerfers 2a. Der Modulator 21 kann Teil des Steuergeräts 45 des Scheinwerfers 2a sein. Die dem anderen Scheinwerfer 1a zugeordnete bzw. darin untergebrachte Überwachungseinrichtung 1b umfasst die Detektoreinheit 12 (z.B. einen Halbleiterdetektor) und eine Optik 13 (z.B. in Form einer Linse) und einen Spiegel 14. Der Spiegel 14 dient dazu, gestreutes Licht von der Seite einzufangen, um so den Überwachungsbereich 9 zu definieren, in dem Personen oder Objekte 7 detektiert werden können. Durch einen schrägen Einbau der Detektoreinheit der Überwachungseinrichtung 1b kann auf den Spiegel 14 verzichtet werden. Durch eine optionale Blende 15 vor der Detektoreinheit 12 kann der räumliche Empfangsbereich weiter eingeschränkt werden. Ein elektronisches Filter 11 oder ein Demodulator filtert das Detektorsignal, so dass nur Licht von der dem Überwachungssystem zugeordneten Sendeeinheit zum Detektorsignal beitragen kann. Dies verhindert Störungen durch Fremdlicht, z.B. von entgegenkommenden Fahrzeugen. Das elektronische Filter 11 oder der Demodulator kann Bestandteil des Steuergeräts 45 des anderen Scheinwerfers 1a sein.

Es sei erwähnt, dass die AFS-Regelung auch Abweichungen vom klassischen 2-Scheinwerfer-System erlaubt, z.B. ein durchgehendes Lichtband etc. So kann man sich für die vorstehende Erfindung auch ein einzelnes wie auch immer geartetes Scheinwerfermodul vorstellen, das sowohl die Überwachungseinrichtung als auch seitlich dazu versetzt und in einem lateralen Abstand dazu eine Lichtquelle 22 zur Erzeugung des Aussendebereichs 24 aufweist, der von der Überwachungseinrichtung überwacht wird. Wichtig dabei ist, dass der Detektionsbereich 16 so schräg mit dem Aussendebereich 24 eines oder mehrerer Scheinwerfermodule überlappt, dass sich ein entsprechend eingeengter Überwachungsbereich 9 ergibt. Zum Beispiel wäre es denkbar, dass sich eine Überwachungseinrichtung in größerer Höhe (z.B. bei einem LKW im Dachbereich) befindet und ihr Detektionsbereich 16 von oben schräg nach unten mit dem Aussendebereich 24 überlappt. Diese Situation wäre bspw. in Figur 2 dargestellt, wenn man sich vorstellt, dass dort eine Seitenansicht (und nicht wie oben beschrieben eine Draufsicht) dargestellt ist.

## Patentansprüche

1. Scheinwerferanordnung eines Kraftfahrzeugs (30), umfassend mindestens zwei in einem Frontbereich des Kraftfahrzeugs (30) montierte Scheinwerfer (1a, 2a), wobei ein erster Scheinwerfer (1a) mindestens eine Lichtquelle (22) zum Aussenden von Licht in einen Aussendebereich (24) vor dem Kraftfahrzeug (30) und ein weiterer Scheinwerfer (2a) mindestens eine weitere Lichtquelle (22) zum Aussenden von Licht in einen weiteren Aussendebereich (24) vor demselben Kraftfahrzeug (30) aufweist und wobei der erste Scheinwerfer (1a) eine Überwachungseinrichtung (1b) zum Überwachen eines Überwachungsbereichs (9) vor dem Kraftfahrzeug (30) und zur Detektion von Personen und/oder Objekten (7) in dem Überwachungsbereich (9) umfasst, **dadurch gekennzeichnet, dass** die Überwachungseinrichtung (1b) des ersten Scheinwerfers (1a) eine Detektoreinheit (12) zur Detektion von Personen und/oder Objekten (7) in dem weiteren Aussendebereich (24) der mindestens einen weiteren Lichtquelle (22) des weiteren Scheinwerfers (2a) der Scheinwerferanordnung vor demselben Kraftfahrzeug (30) aufweist, die Detektoreinheit (12) einen Detektionsbereich (16) aufweist, den die Detektoreinheit (12) überwacht, wobei sich der Überwachungsbereich (9) der Überwachungseinrichtung (1b) des ersten Scheinwerfers (1a) aus einer Überlappung des Detektionsbereichs (16) der Detektoreinheit (12) des ersten Scheinwerfers (1a) mit dem weiteren Aussendebereich (24) der weiteren Lichtquelle (22) des weiteren Scheinwerfers (2a) desselben Kraftfahrzeugs (30) ergibt und wobei die Detektoreinheit (12) nur Personen und/oder Objekte (7) in dem Überwachungsbereich (9) detektiert, und dass der weitere Scheinwerfer (2a) eine weitere Überwachungseinrichtung (2b) zum Überwachen eines weiteren Überwachungsbereichs vor dem Kraftfahrzeug (30) und zur Detektion von Personen und/oder Objekten in dem Überwachungsbereich umfasst, wobei die weitere Überwachungseinrichtung (2b) des weiteren Scheinwerfers (2a) eine weitere Detektoreinheit zur Detektion von Personen und/oder Objekten in dem Aussendebereich der mindestens einen Lichtquelle (22) des ersten Scheinwerfers (2a) der Scheinwerferanordnung vor demselben Kraftfahrzeug (30) aufweist, und dass eine Hauptrichtung (16a) eines Detektionsbereichs (16) einer Überwachungseinrichtung (1b; 2b) eine Lichtaustrittsrichtung (24a) eines Aussendebereichs (24) der der Überwachungseinrichtung (1b; 2b) jeweils zugeordneten Lichtquelle (2a; 1a) schräg schneidet, so dass sich ein eingeengter Überwachungsbereich (9) ergibt und dass die Detektoreinheit dazu ausgebildet sind, ein Maß von Licht zu erfassen, das an Personen und/oder Objekten (7) reflektiert bzw. gestreut wurde, die sich in dem Überwachungsbereich 0 - 5 Meter vor dem Kraftfahrzeug befinden.

2. Scheinwerferanordnung nach Anspruch 1, **dadurch gekennzeichnet, dass** die Lichtquelle (22) der Scheinwerfer (1a; 2a) eine Halbleiterlichtquelle zum Aussenden von Licht zur Erzeugung einer Scheinwerferfunktion der Scheinwerfer (1a; 2a) oder eines Teils davon umfasst.

3. Scheinwerferanordnung nach Anspruch 2, **dadurch gekennzeichnet, dass** die Halbleiterlichtquelle (22) der Scheinwerfer (1a; 2a) mindestens eine Laser-Lichtquelle umfasst.

4. Scheinwerferanordnung nach Anspruch 2 oder 3, **dadurch gekennzeichnet, dass** die Überwachungseinrichtungen 1b; 2b) zur Ansteuerung der ihr jeweils zugeordneten Halbleiterlichtquelle (22) in Abhängigkeit von einem Ergebnis der Detektion von Personen und/oder Objekten (7) in dem Überwachungsbereich (9) ausgebildet sind

5. Scheinwerferanordnung nach Anspruch 3 und 4, **dadurch gekennzeichnet, dass** die Überwachungseinrichtungen (1b; 2b) ausgebildet sind, die Halbleiterlichtquelle (22) des ihr jeweils zugeordneten Scheinwerfers (1a; 2a) im Sinne einer Verringerung der Leuchtdichte anzusteuern, falls die Menge des an den in dem Überwachungsbereich (9) befindlichen Personen und/oder Objekten (7) reflektierten bzw. gestreuten Lichts einen vorgebbaren Schwellwert überschreitet.

6. Scheinwerferanordnung nach einem der Ansprüche 1 bis 5, **dadurch gekennzeichnet, dass** ein Betrieb der Detektoreinheit (12) zumindest temporär nach einem vorgegebenen Muster moduliert erfolgt, wobei das Muster für den Betrieb der Detektoreinheit (12) einem Muster zum zumindest temporären Betrieb der weiteren Lichtquelle (22) des weiteren Scheinwerfers (2a; 1a) desselben Kraftfahrzeugs (30) entspricht.

7. Scheinwerferanordnung nach einem der Ansprüche 1 bis 6, **dadurch gekennzeichnet, dass** die weitere Lichtquelle (22) des weiteren Scheinwerfers (2a; 1a) eine Halbleiterlichtquelle, vorzugsweise eine Laser-Lichtquelle, zum Aussenden von Licht zur Erzeugung einer Scheinwerferfunktion des weiteren Scheinwerfers (2a; 1a) oder eines Teils davon umfasst.

8. Scheinwerferanordnung nach einem der Ansprüche 1 bis 7, **dadurch gekennzeichnet, dass** ein lateraler Abstand zwischen einer Überwachungseinrichtung (1b; 2b) und der ihr jeweils zugeordneten Lichtquelle (2a; 1a) eine Mindestwert entsprechend der halben Fahrzeugbreite überschreitet.

9. Verfahren zum Betreiben einer Scheinwerferanordnung eines Kraftfahrzeugs (30), wobei die Scheinwerferanordnung mindestens zwei in einem Frontbereich des Kraftfahrzeugs (30) montierte Scheinwerfer (1a, 2a) umfasst, wobei ein erster Scheinwerfer (1a) mindestens eine Lichtquelle (22) zum Aussenden von Licht in einen Aussendebereich (24) vor dem Kraftfahrzeug (30) und ein weiterer Scheinwerfer (2a) mindestens eine weitere Lichtquelle (22) zum Aussenden von Licht in einen weiteren Aussendebereich (24) vor demselben Kraftfahrzeug (30) aufweist und wobei der erste Scheinwerfer (1a) eine Überwachungseinrichtung (1b) zum Überwachen eines Überwachungsbereichs (9) vor dem Kraftfahrzeug (30) und zur Detektion von Personen und/oder Objekten (7) in dem Überwachungsbereich (9) umfasst, **dadurch gekennzeichnet, dass** die Überwachungseinrichtung (1b) des ersten Scheinwerfers (1a) eine Detektoreinheit (12) zur Detektion von Personen und/oder Objekten (7) in dem weiteren Aussendebereich (24) der mindestens einen weiteren Lichtquelle (22) des weiteren Scheinwerfers (2a) der Scheinwerferanordnung vor demselben Kraftfahrzeug (30) aufweist, die Detektoreinheit (12) einen Detektionsbereich (16) aufweist, der von der Detektoreinheit (12) überwacht wird, wobei sich der Überwachungsbereich (9) der Überwachungseinrichtung (1b) des ersten Scheinwerfers (1a) aus einer Überlappung des Detektionsbereichs (16) der Detektoreinheit (12) des ersten Scheinwerfers (1a) mit dem weiteren Aussendebereich (24) der Lichtquelle (22) des weiteren Scheinwerfers (2a) desselben Kraftfahrzeugs (30) ergibt und wobei durch die Detektoreinheit (12) nur Personen und/oder Objekte (7) in dem Überwachungsbereich (9) detektiert werden, und dass der weitere Scheinwerfer (2a) eine Überwachungseinrichtung (2b) zum Überwachen eines Überwachungsbereichs vor dem Kraftfahrzeug (30) und zur Detektion von Personen und/oder Objekten in dem Überwachungsbereich umfasst, die Überwachungseinrichtung (2b) des weiteren Scheinwerfers (2a) eine Detektoreinheit zur Detektion von Personen und/oder Objekten in dem ersten Aussendebereich der mindestens einen ersten Lichtquelle (22) des ersten Scheinwerfers (2a) der Scheinwerferanordnung vor demselben Kraftfahrzeug (30) aufweist, so dass eine Lichtquelle und eine der Lichtquelle zugeordnete Detektoreinheit in separaten, voneinander räumlich getrennten Scheinwerfern (1a, 2a) angeordnet sind und dass sich ein Detektionsbereich (16) so schräg mit dem zugeordneten Aussendebereich (24) überlappt, dass sich ein eingeengter Überwachungsbereich (9) ergibt und dass durch die Detektoreinheit ein Maß von Licht erfasst wird, das an Personen und/oder Objekten (7) reflektiert bzw. gestreut wurde, die sich in dem Überwachungsbereich 0 - 5 Meter vor dem Kraftfahrzeug befinden.

## Claims

1. Headlight assembly of a motor vehicle (30), comprising at least two headlights (1a, 2a) mounted in a front region of the motor vehicle (30), a first headlight (1a) having at least one light source (22) for emitting light into an emission region (24) in front of the motor vehicle (30), and a further headlight (2a) having at least one further light source (22) for emitting light into a further emission region (24) in front of the same motor vehicle (30), the first headlight (1a) comprising a monitoring device (1b) for monitoring a monitoring region (9) in front of the motor vehicle (30) and for detecting people and/or objects (7) in the monitoring region (9), **characterized in that** the monitoring device (1b) of the first headlight (1a) comprises a detector unit (12) for detecting people and/or objects (7) in the further emission region (24) of the at least one further light source (22) of the further headlight (2a) of the headlight assembly in front of the same motor vehicle (30), the detector unit (12) has a detection region (16) that the detector unit (12) monitors, the monitoring region (9) of the monitoring device (1b) of the first headlight (1a) resulting from an overlap of the detection region (16) of the detector unit (12) of the first headlight (1a) with the further emission region (24) of the further light source (22) of the further headlight (2a) of the same motor vehicle (30), and the detector unit (12) only detecting people and/or objects (7) in the monitoring region (9), and **in that** the further headlight (2a) has a further monitoring device (2b) for monitoring a further monitoring region in front of the motor vehicle (30) and for detecting people and/or objects in the monitoring region, the further monitoring device (2b) of the further headlight (2a) comprising a further detector unit for detecting people and/or objects in the emission region of the at least one light source (22) of the first headlight (2a) of the headlight assembly in front of the same motor vehicle (30), and **in that** a main direction (16a) of a detection region (16) of a monitoring device (1b; 2b) obliquely intersects a light output direction (24a) of an emission region (24) of the relevant light source (2a; 1a) assigned to the monitoring device (1b; 2b), such that a restricted monitoring region (9) is produced, and **in that** the detector unit is designed to detect an amount of light that has been reflected or scattered by people and/or objects (7) located in the monitoring region 0-5 meters in front of the motor vehicle.

2. Headlight assembly according to claim 1, **characterized in that** the light source (22) of the headlights (1a; 2a) comprises a semiconductor light source for emitting light for generating a headlight function of the headlights (1a; 2a) or a part thereof.

3. Headlight assembly according to claim 2, **characterized in that** the semiconductor light source (22) of the headlights (1a; 2a) comprises at least one laser light source.

4. Headlight assembly according to claim 2 or claim 3, **characterized in that** the monitoring devices (1b; 2b) are designed to control the relevant semiconductor light source (22) assigned thereto on the basis of a result of the detection of people and/or objects (7) in the monitoring region (9).

5. Headlight assembly according to claims 3 and 4, **characterized in that** the monitoring devices (1b; 2b) are designed to control the semiconductor light source (22) of the relevant headlight (1a; 2a) assigned thereto in the sense of reducing the luminance if the amount of the light reflected or scattered by people and/or objects (7) located in the monitoring region (9) exceeds a predefinable threshold value.

6. Headlight assembly according to any of claims 1 to 5, **characterized in that** the detector unit (12) is at least temporarily operated in a modulated manner according to a predetermined pattern, the pattern for operating the detector unit (12) corresponding to a pattern for at least temporary operation of the further light source (22) of the further headlight (2a; 1a) of the same motor vehicle (30).

7. Headlight assembly according to any of claims 1 to 6, **characterized in that** the further light source (22) of the further headlight (2a; 1a) is a semiconductor light source, preferably a laser light source, for emitting light for generating a headlight function of the further headlight (2a; 1a) or a part thereof.

8. Headlight assembly according to any of claims 1 to 7, **characterized in that** a lateral distance between a monitoring device (1b; 2b) and the relevant light source (2a; 1a) assigned thereto exceeds a minimum value corresponding to half the vehicle width.

9. Method for operating a headlight assembly of a motor vehicle (30), the headlight assembly comprising at least two headlights (1a, 2a) mounted in a front region of the motor vehicle (30), a first headlight (1a) having at least one light source (22) for emitting light into an emission region (24) in front of the motor vehicle (30), and a further headlight (2a) having at least one further light source (22) for emitting light into a further emission region (24) in front of the same motor vehicle (30), the first headlight (1a) comprising a monitoring device (1b) for monitoring a monitoring region (9) in front of the motor vehicle (30) and for detecting people and/or objects (7) in the monitoring region (9), **characterized in that** the monitoring device (1b) of the first headlight (1a) comprises a detector unit (12) for detecting people and/or objects (7) in the further emission region (24) of the at least one further light source (22) of the further headlight (2a) of the headlight assembly in front of the same motor vehicle (30), the detector unit (12) has a detection region (16) that is monitored by the detector unit (12), the monitoring region (9) of the monitoring device (1b) of the first headlight resulting from an overlap of the detection region (16) of the detector unit (12) of the first headlight (1a) with the further emission region (24) of the light source (22) of the further headlight (2a) of the same motor vehicle (30), and only people and/or objects (7) in the monitoring region (9) being detected by the detector unit (12), and **in that** the further headlight (2a) has a monitoring device (2b) for monitoring a monitoring region in front of the motor vehicle (30) and for detecting people and/or objects in the monitoring region, the monitoring device (2b) of the further headlight (2a) comprises a detector unit for detecting people and/or objects in the first emission region of the at least one first light source (22) of the first headlight (2a) of the headlight assembly in front of the same motor vehicle (30), such that a light source and a detector unit assigned to the light source are arranged in separate headlights (1a, 2a) that are spatially separated from one another, and **in that** a detection region (16) overlaps so obliquely with the associated emission region (24) that a restricted monitoring region (9) is produced and that an amount of light that has been reflected or scattered by people and/or objects (7) located in the monitoring region 0-5 meters in front of the motor vehicle is detected by the detector unit.

## Revendications

1. Ensemble de phare d'un véhicule automobile (30), comprenant au moins deux phares (1a, 2a) montés dans une zone avant du véhicule automobile (30), dans lequel un premier phare (1a) comprend au moins une source de lumière (22) pour émettre de la lumière dans une zone d'émission (24) devant le véhicule automobile (30) et un autre phare (2a) comprend au moins une autre source de lumière (22) pour émettre de la lumière dans une autre zone d'émission (24) devant le même véhicule automobile (30), et dans lequel le premier phare (1a) comprend un dispositif de surveillance (1b) pour surveiller une zone de surveillance (9) devant le véhicule automobile (30) et pour détecter des personnes et/ou des objets (7) dans la zone de surveillance (9), **caractérisé par le fait que** le dispositif de surveillance (1b) du premier phare (1a) présente une unité de détection (12) pour détecter des personnes et/ou des objets (7) dans ladite autre zone d'émission (24) de ladite au moins une autre source de lumière (22) de l'autre phare (2a) de l'ensemble de phare devant le même véhicule automobile (30), ladite unité de détection (12) présente une zone de détection (16) que l'unité de détection (12) surveille, dans lequel la zone de surveillance (9) du dispositif de surveillance (1b) du premier phare (1a) résulte d'un chevauchement de la zone de détection (16) de l'unité de détection (12) du premier phare (1a) avec l'autre zone d'émission (24) de l'autre source de lumière (22) de l'autre phare (2a) du même véhicule automobile (30), et dans lequel l'unité de détection (12) ne détecte que des personnes et/ou des objets (7) dans la zone de surveillance (9), et que ledit autre phare (2a) comprend un autre dispositif de surveillance (2b) pour surveiller une autre zone de surveillance devant le véhicule automobile (30) et pour détecter des personnes et/ou des objets dans la zone de surveillance, dans lequel l'autre dispositif de surveillance (2b) de l'autre phare (2a) comprend une autre unité de détection pour détecter des personnes et/ou des objets dans la zone d'émission de ladite au moins une source de lumière (22) du premier phare (2a) de l'ensemble de phare devant le même véhicule automobile (30), et qu'une direction principale (16a) d'une zone de détection (16) d'un dispositif de surveillance (1b ; 2b) coupe obliquement une direction de sortie de lumière (24a) d'une zone d'émission (24) de la source de lumière (2a; 1a) respectivement associée au dispositif de surveillance (1b; 2b), de sorte qu'il en résulte une zone de surveillance (9) restreinte et que l'unité de détection est conçue pour détecter une mesure de lumière qui a été réfléchie ou bien diffusée par des personnes et/ou des objets (7) qui sont situé(e)s dans la zone de surveillance à une distance de 0 à 5 mètre(s) devant le véhicule automobile.

2. Ensemble de phare selon la revendication 1, **caractérisé par le fait que** la source de lumière (22) des phares (1a; 2a) comprend une source de lumière à semi-conducteur pour émettre de la lumière afin de générer une fonction phare des phares (1a; 2a) ou une partie de ceci.

3. Ensemble de phare selon la revendication 2, **caractérisé par le fait que** la source de lumière à semi-conducteur (22) des phares (1a; 2a) comprend au moins une source de lumière laser.

4. Ensemble de phare selon la revendication 2 ou 3, **caractérisé par le fait que** les dispositifs de surveillance (1b; 2b) sont conçus pour commander la source de lumière à semi-conducteur (22) qui leur est respectivement associée, en fonction d'un résultat de la détection de personnes et/ou d'objets (7) dans la zone de surveillance (9).

5. Ensemble de phare selon la revendication 3 et 4, **caractérisé par le fait que** les dispositifs de surveillance (1b; 2b) sont conçus pour commander la source de lumière à semi-conducteur (22) du phare (1a; 2a) qui lui est respectivement associé, dans le sens d'une réduction de la luminance si la quantité de lumière réfléchie ou bien diffusée par les personnes et/ou les objets (7) se trouvant dans la zone de surveillance (9) dépasse une valeur de seuil prédéfinissable.

6. Ensemble de phare selon l'une quelconque des revendications 1 à 5, **caractérisé par le fait qu'**un fonctionnement de l'unité de détection (12) est modulé au moins temporairement selon un schéma prédéterminé, dans lequel le schéma pour le fonctionnement de l'unité de détection (12) correspond à un schéma pour le fonctionnement au moins temporaire de ladite autre source de lumière (22) de l'autre phare (2a; 1a) du même véhicule automobile (30).

7. Ensemble de phare selon l'une quelconque des revendications 1 à 6, **caractérisé par le fait que** l'autre source de lumière (22) de l'autre phare (2a; 1a) comprend une source de lumière à semi-conducteur, de préférence une source de lumière laser, pour émettre de la lumière afin de générer une fonction de phare de l'autre phare (2a; 1a) ou une partie de ceci.

8. Ensemble de phare selon l'une quelconque des revendications 1 à 7, **caractérisé par le fait qu'**une distance latérale entre un dispositif de surveillance (1b; 2b) et la source de lumière (2a; 1a) qui lui est respectivement associée dépasse une valeur minimale correspondant à la moitié de la largeur du véhicule.

9. Procédé pour faire fonctionner un ensemble de phare d'un véhicule automobile (30), dans lequel ledit ensemble de phare comprend au moins deux phares (1a, 2a) montés dans une zone avant du véhicule automobile (30), dans lequel un premier phare (1a) comprend au moins une source de lumière (22) pour émettre de la lumière dans une zone d'émission (24) devant le véhicule automobile (30) et un autre phare (2a) comprend au moins une autre source de lumière (22) pour émettre de la lumière dans une autre zone d'émission (24) devant le même véhicule automobile (30), et dans lequel le premier phare (1a) comprend un dispositif de surveillance (1b) pour surveiller une zone de surveillance (9) devant le véhicule automobile (30) et pour détecter des personnes et/ou des objets (7) dans la zone de surveillance (9), **caractérisé par le fait que** le dispositif de surveillance (1b) du premier phare (1a) présente une unité de détection (12) pour détecter des personnes et/ou des objets (7) dans ladite autre zone d'émission (24) de ladite au moins une autre source de lumière (22) de l'autre phare (2a) de l'ensemble de phare devant le même véhicule automobile (30), ladite unité de détection (12) présente une zone de détection (16) qui est surveillée par l'unité de détection (12), dans lequel la zone de surveillance (9) du dispositif de surveillance (1b) du premier phare (1a) résulte d'un chevauchement de la zone de détection (16) de l'unité de détection (12) du premier phare (1a) avec l'autre zone d'émission (24) de la source de lumière (22) de l'autre phare (2a) du même véhicule automobile (30), et dans lequel l'unité de détection (12) ne détecte que des personnes et/ou des objets (7) dans la zone de surveillance (9), et que ledit autre phare (2a) comprend un dispositif de surveillance (2b) pour surveiller une zone de surveillance devant le véhicule automobile (30) et pour détecter des personnes et/ou des objets dans la zone de surveillance, dans lequel le dispositif de surveillance (2b) de l'autre phare (2a) comprend une unité de détection pour détecter des personnes et/ou des objets dans la première zone d'émission de ladite au moins une première source de lumière (22) du premier phare (2a) de l'ensemble de phare devant le même véhicule automobile (30), de sorte qu'une source de lumière et une unité de détection associée à la source de lumière sont disposées dans des phares (1a, 2a) séparés qui sont séparés dans l'espace l'un de l'autre, et qu'une zone de détection (16) et la zone d'émission (24) associée se chevauchent obliquement de telle manière qu'il en résulte une zone de surveillance (9) restreinte et que l'unité de détection détecte une mesure de lumière qui a été réfléchie ou bien diffusée par des personnes et/ou des objets (7) qui sont situé(e)s dans la zone de surveillance à une distance de 0 à 5 mètre(s) devant le véhicule automobile.
